# EUROPEAN PATENT APPLICATION

(11) **EP 4 344 847 A1**
(43) Date of publication of application: **03.04.2024**
(21) Application number: 23198812.2
(22) Date of filing: 21.09.2023
(51) Int. Cl.: B29C 45/14, B65D 8/00, B65D 3/04, B29L 31/00

(54) **ADJUSTMENT OF MACHINE FOR PRODUCTION OF PACKAGES FOR HOLDING LIQUID FOOD**

(30) Priority: 28.09.2022 EP 22198387
(71) Applicant: Tetra Laval Holdings & Finance S.A., 1009 Pully (CH)
(72) Inventor: Ostenson, Toni, 22186 Lund (SE)
(74) Representative: Tetra Pak - Patent Attorneys SE

(57) **Abstract**

A control device (230) operates a machine (2) for production of packages (10) for holding liquid food. The machine is operated to move an inner tool (21), which projects radially from a rotatable member (22), into a processing position (II), arrange an outer tool (25) to surround an end of the inner tool (21) in the processing position (II), and operate the outer tool (25) to provide a top portion on an end of a package body (11) that is arranged on the inner tool (21). The control device (230) performs a monitoring procedure, by determining at least one parameter value indicative of lateral force on the inner tool (21) in the processing position (II) while the outer tool (25) is arranged to surround the end of the inner tool (21), and by selectively adjusting a relative position of the inner and outer tools (21, 25) based on the parameter value(s).

## Description

### Technical Field

The present disclosure relates to production of packages for holding liquid food and, in particular, to a technique of controlling a machine for production of such packages.

### Background

Within the food industry, it is common practice to pack liquid food in packages manufactured from paper-based laminates comprising a core layer of paper or paperboard and one or more barrier layers of, for example, plastic.

One common package type is manufactured by forming a tube-shaped blank ("sleeve") of the above-described paper-based laminate and sealing one end of the sleeve by a top of plastic material. Conventionally, the top is formed directly on the end of the sleeve by injection molding. The top comprises a neck portion that defines a pouring spout, which is sealed by a cap and/or a foil. The cap and/or foil may be provided by the injection molding or in a separate mounting step. The package is then transported to a subsequent filling station, in which the liquid product is filled through the opposite open end of the package. After filling, the open end of the package is folded and sealed. The Applicant markets these types of packages under the trademark Tetra Top^{®}.

An example of such a top forming operation is shown in WO2007/106006, in which the sleeve is arranged on an arm of a mandrel wheel, which is then rotated to arrange the sleeve at an injection molding device. While the sleeve is held on the arm, the injection molding device is arranged to surround an end of the sleeve and operated to mold the top onto this end.

Industrial production and packaging of liquid food is automated and involves advanced process control of machinery to achieve high-volume production. Safe and reliable operation is of great significance since operational failures and ensuing production standstills may have a profound impact on production cost and product quality. For example, it is vital to avoid operational failures that may damage machinery or lead to rejection of large production volumes of packages.

The top forming operation is vulnerable to operational errors since incorrect attachment of the top to the sleeve may result in packages that are prone to leak liquid food, or even non-sealed packages. Such packages need to be rejected. Incorrect attachment may also cause consequential issues in downstream production, for example a need to clean the filling station of leaked food products.

This problem is generally applicable whenever a top is to be provided on a body portion in production of packages for holding liquid food.

### Summary

It is an objective to at least partly overcome one or more of the above-identified limitations of the prior art.

One such objective is to provide a technique of improving the performance of forming a top portion on a body portion in production of packages for holding liquid food.

One or more of these objectives, as well as further objectives that may appear from the description below, are at least partly achieved by a computer-implemented method of operating a machine to produce a package for holding liquid food, a computer-readable medium, and a control device according to the independent claims, embodiments thereof being defined by the dependent claims.

A first aspect relates to a computer-implemented method of operating a machine to produce a package for holding liquid food. The machine comprises an inner tool and an outer tool. The inner tool projects radially from a rotatable member, which is operable to move the inner tool from a loading position into a processing position, in which the outer tool is operable to be arranged to surround an end of the inner tool. The method comprises a production procedure comprising: operating the rotatable member to arrange the inner tool in the loading position; arranging a package body on the inner tool in the loading position; operating the rotatable member to move the inner tool with the package body from the loading position to the processing position; arranging the outer tool to surround the end of the inner tool to thereby surround an end of the package body; and operating the outer tool to provide a top portion on the end of the package body, thereby producing said package. The method further comprises a monitoring procedure comprising: determining, based on a measurement signal, at least one parameter value indicative of a lateral force on the inner tool in the processing position while the outer tool is arranged to surround the end of the inner tool; and selectively adjusting, based on the at least one parameter value, a relative position between the inner tool and the outer tool.

By the monitoring procedure, the method of the first aspect provides a technique of quantifying and correcting for misalignment between the inner and outer tools that may result in inadequate machine performance in terms of the quality of the resulting packages. Misalignment may occur, for example, as a result of errors in the control of the rotatable member and/or the outer tool, shifts in the position of the inner tool and/or the outer tool, mechanical deformation of the inner tool and/or the outer tool, etc. The monitoring procedure may be performed separately from the production procedure or during the production procedure. If performed in advance of production, the package body may or may not be arranged to surround the inner tool during the monitoring procedure. If performed during the production procedure, the actual performance of the machine may be assessed while the outer tool is operated to provide the top portion on the body portion. It is thus possible for the method to take corrective measures during on-going production, to prevent an otherwise likely stop of production as a result of an emerging misalignment between the inner and outer tools.

The parameter value may be any measurement value that is proportional to or otherwise representative of the lateral force on the inner tool. For example, the parameter value may be a lateral force value from a force sensor, a torque value from a torque sensor, a power value or drive current value of a drive unit for the rotatable member, a strain value from a strain sensor, etc.

The inner tool projects radially from the rotatable member and thus has a longitudinal extent from the rotatable member to a distal end, which is the end that is surrounded by the outer tool in the processing position. As used herein, the lateral force refers to the total force component that acts on the inner tool and is directed perpendicular to the longitudinal extent of the inner tool.

As used herein, the term "selectively adjusting" implies that the relative position between the inner and outer tools is adjusted subject to fulfillment of a predefined criterion, which is based on the at least one parameter value.

As used herein, "liquid food" refers to any food product that is non-solid, semiliquid or pourable at room temperature, including beverages, such as water, fruit juices, wines, beers, sodas, as well as dairy products, sauces, oils, creams, custards, soups, pastes, etc., and also solid food products in a liquid, such as beans, fruits, tomatoes, stews, etc.

As used herein, "a package" refers to any package or container suitable for containment of liquid food products, including but not limited to containers formed of cardboard or paper-based laminate, and containers made of or comprising plastic material.

A second aspect relates to a computer-readable medium comprising program instructions, which when executed by processor circuitry, is configured to cause the processor circuitry to perform the method of the first aspect or any of its embodiments.

A third aspect relates to a control device which is configured to perform the method of the first aspect or any of its embodiments, the control device comprising a signal interface configured to receive the measurement signal and provide control signals for operating the machine.

The second and third aspect share technical advantages with the first aspect.

Still other objectives, features, embodiments, aspects and advantages of the invention will appear from the following detailed description as well as from the accompanying schematic drawings.

### Drawings

FIG. 1 is a schematic view of a sequence of processing stations in an example production line for manufacture of packages containing liquid food.
FIG. 2A is side view of an example package produced by a top forming station in the production line of FIG. 1, and FIG. 2B is a section view of a shoulder portion of the package in FIG. 2A
FIG. 3 is a side view of a top forming station in accordance with a detailed example.
FIG. 4A is a section view of an inner tool that is misaligned with respect to an outer tool in the top forming station of FIG. 3, and FIG. 4B illustrates forces acting on the inner tool and its drive mechanism as a result of the misalignment.
FIG. 5 is a flow chart of an example production procedure for operating a top forming station.
FIGS 6-7 are flow charts of example monitoring procedures in relation to a top forming station.
FIG. 8 is an illustration of example thresholds for use in the monitoring procedure of FIG. 7.
FIGS 9A-9B are graphs of measurement data obtained during operation of a top forming station.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

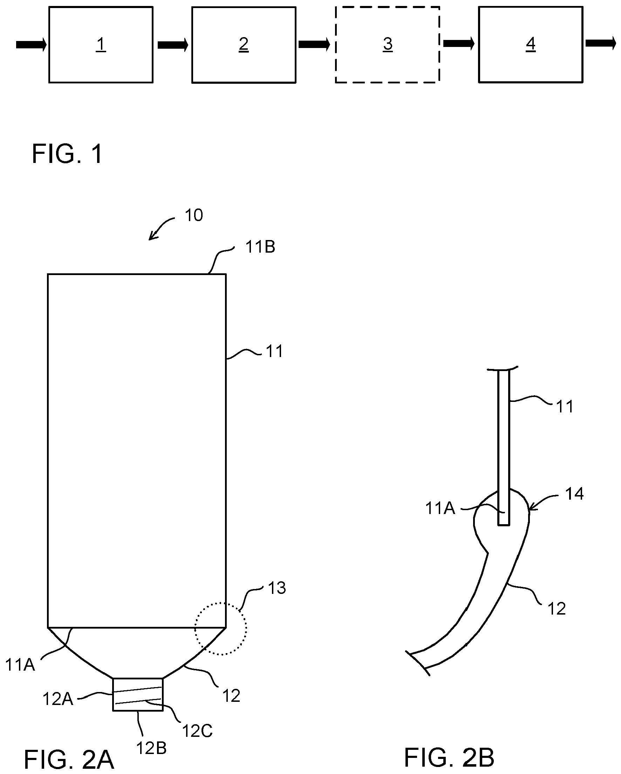

FIG. 1 schematically illustrates an example production line for production of sealed packages that contain liquid food. The production line comprises a sequence of stations 1-4. A sleeve forming station 1 is configured to re-shape a sheet material into a package body ("sleeve"). The package body may be a cylindrically shaped package body. The sheet material may be made of a paper-based laminate as discussed in the Background section. A top forming station 2 is configured to provide a top portion on one open end of the sleeve. The top portion thereby fully or partially closes off an open end of the sleeve. For example, the top portion may define an access opening. The access opening may or may not be covered by a membrane (foil) or a cap when the package leaves the top forming station 2. In the examples described hereinbelow, the top forming station 2 is configured to provide the top portion by injection molding. After the top forming station 2, the package has an open end opposite to the end that is provided with the top portion. The production line may include a capping station 3, which is configured to attach a cap on the above-mentioned access opening. A filling station 4 is configured to fill liquid food into the package, through its open end, and then seal the open end to form a final package containing liquid food. The filling station 4 may also be configured to perform a sterilization of the package before the filling operation.

Although not shown in FIG. 1, any one of the stations 1-4 may be duplicated to operate in parallel to increase the throughput of the production line. Each station 1-4 may include one or more machines for performing the processing operations of the station. It is also conceivable that more than one station is implemented by a single machine.

In the description, the overriding designation "package" will be employed throughout. Naturally, it should be understood that this designation also encompasses intermediate packages in all of the different phases or states that they undergo on their way to becoming final packages. The term final package is here taken to signify a product-filled, sealed and finally formed package.

FIG. 2A is a side view of a package 10 that is produced by the top forming station 2 in FIG. 1. The package 10 is bottle-shaped and may have any cross-section, including but not limited to circular, square, rectangular, triangular, polygonal, etc. The package 10 is turned up-side down. The package 10 comprises the above-mentioned sleeve 11 and a top portion ("top") 12 which is merged with a sleeve end 11A. The opposite sleeve end 11B is open and provides a filling opening for filling the liquid product into the package 10. In the illustrated example, the top 12 comprises a neck portion ("neck") 12A that defines an access opening or pouring spout 12B. As noted above, the access opening 12B may be sealed by a membrane or foil (not shown). Alternatively, a cap (now shown) may be attached to the neck 12A to close off the access opening 12B before the liquid product is filled into the package 10. For example, one or more threads on the cap may be engaged with threads 12C on the neck 12A.

In some embodiments, the top 12 is made of plastic material and formed by injection molding. By the injection molding, the top 12 is joined with the sleeve end 11A along its circumference. FIG. 2B is a section view of a portion of the interface between the top 12 and the sleeve 11 within the dashed circle 13 in FIG. 2A. As seen, the top 12 comprises a thickened head portion 14 or "bead" that is shaped to enclose and attach to the circumferential sleeve end 11A. It is realized that the strength of the joint between the top 12 and the sleeve 11 depends on the shape and thickness of the bead 14 along the sleeve end 11A. If the joint is too weak at one or more points along the sleeve end 11A, the joint may break when a consumer tries to open the package by removing the above-mentioned membrane and/or by unscrewing the cap. If the formation of the joint is not well-controlled, it is even possible for holes or cracks to form along the joint, causing liquid food to leak from the package. If leaks occur in the filling station 4, the production line may need to be shut down for cleaning, causing costly standstill of production. Further, food safety may be compromised if weak joints break in the final packages, for example when the final packages are distributed to retailers or consumers.

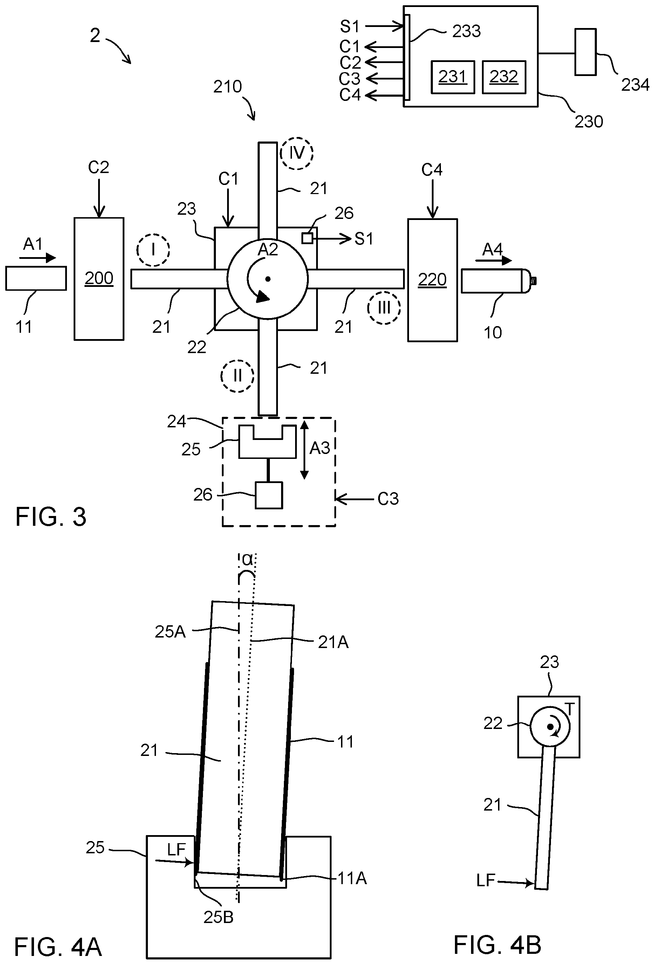

FIG. 3 is a side view of a top forming station or machine 2 in accordance with a non-limiting example. The top forming station 2 comprises a loading device 200, a processing device 210 and an unloading device 220. The loading device 200 is arranged to receive incoming sleeves 11, as indicated by arrow A1, and arrange the sleeves 11 on the processing device 210. The processing device 210 is configured to transform sleeves 11 into packages 10. The unloading device 220 is arranged to remove the packages 10 from the processing device 210 and provide them for downstream processing, as indicated by arrow A4.

FIG. 3 also includes a control device 230, which is configured control the operation of the top forming station 2. The control device 230 may or may not be part of the station 2. The control device 230 may be implemented by hardware or a combination of software and hardware. In the illustrated example, the control device 230 comprises processor circuitry 231, computer memory 232 and a signal interface 233. The processor circuitry 231 may, for example include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program comprising computer instructions (program instructions) may be stored in the memory 232 and executed by the processor circuitry 231 to perform methods and procedures as described in hereinbelow. The control program may be supplied to the control device 230 on a computer-readable medium, which may be a tangible (non-transitory) product (e.g. magnetic medium, optical disk, read-only memory, flash memory, etc.) or a propagating signal. The signal interface 233 may be configured in accordance with conventional practice to receive input signals and provide output signals. In the illustrated example, the control device 230 is further connected to a feedback device 234 which is configured to generate audible and/or visible feedback to an operator of the station 2. For example, the feedback device 234 may comprise one or more of a display, an indicator lamp, a speaker, a siren, etc.

The operations of the loading and unloading devices 200, 220 are controlled by control signals from the control device 230, represented by C2 and C4. The loading and unloading devices 200, 220 may be configured in many different ways to perform their respective function and will not be described in detail. Examples are found in aforesaid WO2007/106006.

The processing device 210 comprises elongated arms 21 that are attached to or otherwise combined with a rotatable member 22, also known as wheel or mandrel wheel. Each of the arms 21 form or comprise an inner tool, also known as mandrel. For simplicity, no distinction is made between arms and inner tools in the following. The elongated arms 21 project radially from and are equidistantly distributed around the wheel 22. In the illustrated example with four arms 21, each arm is arranged at right angles to its neighboring arms. A drive unit 23 is connected to the wheel 22 and operable to rotate the wheel 22 as indicated by arrow A2. The drive unit 23 may be an electric motor capable of accurate angular positioning, for example a servo motor or a stepper motor. The drive unit 23 is operated by control signal C1 from the control device 230. Specifically, the drive unit 23 is operable to intermittently rotate or index the wheel 22 and thus the arms 21 into four different angular positions. The drive unit 23 is stopped at the respective angular position. The positions are indicated by Roman numerals within dashed circles in FIG. 3. Position I is a loading position, in which the arm 21 is aligned with the loading device 200. Position II is a processing position, in which the arm 21 is aligned with a top forming device 24. Position III is an unloading position, in which the arm 21 is aligned with the unloading device 220. Position IV is an intermediate rest position.

The provision of four arms 21 caters for high throughput of the station 2, in that it enables three operations to be performed concurrently: loading a sleeve 11 onto an arm 21 at the loading device 200, processing a sleeve 11 on an arm 21 at the top forming device 24, and unloading a package 10 from an arm 21 at the unloading device 220. However, any number (n) of arms 21 may be provided on the wheel 22, n ≥ 1.

The arms 21 extend from the wheel 22 in a common plane, which forms a rotation plane of the arms 21. Depending on implementation, the rotation plane may be vertical or horizontal.

The top forming device 24 comprises an outer tool 25, which moveable in relation to the arm 21 when in position II. In the illustrated example, the outer tool 25 is linearly moveable between a rest position and an operative position, as indicated by a double-ended arrow A3. In the rest position, the outer tool 25 is spaced from the arm 21. In the operative position, the outer tool 25 is arranged to surround the distal end of the arm 21, and thereby the end 11A (FIG. 2A) of the sleeve 11 that is arranged on the arm 21. An actuator 26 is connected to the outer tool 25 and operable to impart its movement. It should be stressed that FIG. 3 is merely an illustrative example. The outer tool 25 may be moveable in further directions in relation to the operative position. Further, the outer tool 25 may be composed of parts that are separately moveable to meet at the operative position. In its operative position, the outer tool 25 is operable to provide the top 12 on the sleeve end 11A. The top forming operation by the device 24 is controlled by one or more control signals from the control device 230, represented by C3.

As noted above, the top 12 may be formed on the sleeve 11 by injection molding. In such embodiments, the outer tool 25 is an injection molding apparatus. In the operative position of the outer tool 25, the sleeve end 11A (FIG. 2A) is surrounded by the outer tool 25 so as to engage the sleeve end 11A between the end of the arm 21 and the outer tool 25 during the injection molding.

In further detail, when the outer tool 25 is arranged to surround the end of the inner tool 21 and the end of the package body, then a small gap is then formed which extends between the outer tool 25 and the end of the inner tool 21 and the end of the package body. The operating of the outer tool 25 to provide the top portion 12 on the end of the package body (sleeve) 11 typically comprises injecting a plastic material, or any other suitable material, in the gap. The injection molded part, formed by the gap, then becomes the top 12 of the package. The technique of injection molding a plastic top 12 on a sleeve 11 is previously known and will not be described in greater detail here.

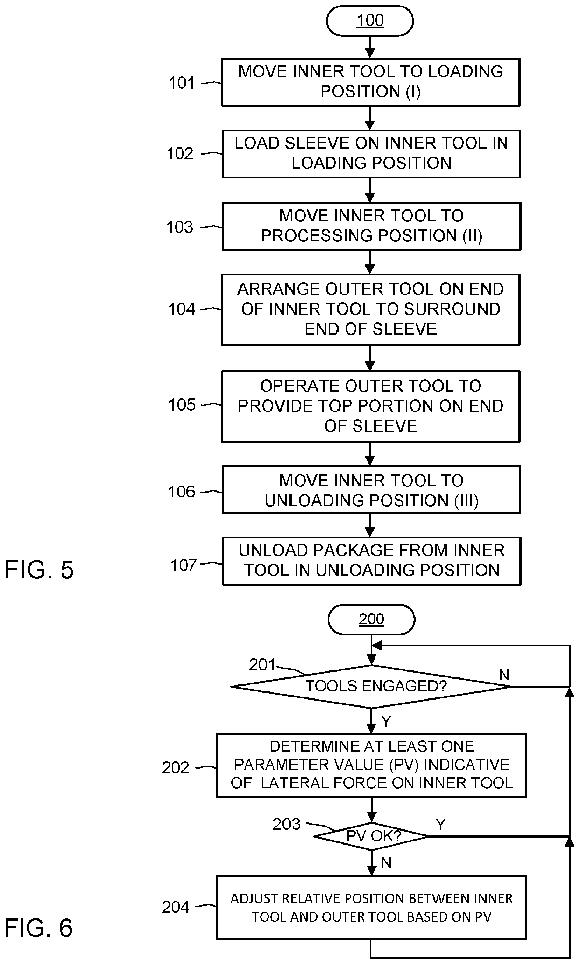

FIG. 5 is a flow chart of a procedure 100 for operating a top forming station 2 to produce a package 10 by starting from a sleeve 11. The production procedure 100 may be implemented by the control device 230 being operated to provide appropriate control signals C1-C4 via its signal interface 233. As noted above, the respective arm is or comprises an inner tool 21 which cooperates with the outer tool 25 during the top forming operation. In step 101, the wheel 22 is operated to arrange an inner tool 21 in the loading position. In FIG. 3, step 101 comprises operating the drive unit 23 to rotate the wheel 22 into a predefined angular position corresponding to position I. In step 102, while the inner tool 21 is in the loading position, a sleeve 11 is arranged on the inner tool 21. In FIG. 3, step 102 comprises operating the loading device 200 to push or otherwise slide a sleeve 11 onto the inner tool 21 in position I. In step 103, the wheel 22 is operated to move the inner tool 21, with the sleeve 11 thereon, from the loading position to the processing position, which is at a predefined angular position of the wheel 22. In FIG. 3, step 103 comprises operating the drive unit 23 to rotate the wheel 22 to swing the inner tool 21 from position I to position II. In step 104, the outer tool 25 is arranged to surround the end of the inner tool 21 to thereby surround the sleeve end 11A. In FIG. 3, step 104 comprises operating the actuator 26 to move the outer tool 25 towards the inner tool 21 and into the operative position. In step 105, the outer tool 25 is operated to provide a top 12 on the sleeve end 11A, to thereby produce the package 10. As noted above, step 105 may comprise operating the outer tool 25 to perform an injection molding to form a shaped top 12 on the sleeve end 11A. In step 106, the wheel 22 is operated to move the inner tool 21, with the package 10 thereon, from the processing position to the unloading position, which is at a predefined angular position of the wheel 22. In FIG. 3, step 106 comprises operating the drive unit 23 to rotate the wheel 22 to swing the inner tool 21 from position II to position III. In step 107, while the inner tool 21 is in the unloading position, the package 10 is removed from the inner tool 21. In FIG. 3, step 107 comprises operating the unloading device 220 to pull or otherwise slide off the package 10 from the inner tool 21 in position III. In the context of FIG. 3, step 107 is followed by a step (not shown) of operating the wheel 22 to move the inner tool 21 from position III to position IV. It may be noted that position IV may be omitted depending on the number of arms 21 and their mutual arrangement.

The production procedure 100 is then repeated to produce a stream of packages 10. It is understood that the procedure 100 may be performed for each arm 21 in the processing device 201 and preferably such that steps 102, 104-105 and 107 are performed concurrently for different arms 21, i.e. that a sleeve 11 is loaded on one arm 21 in position I, a top 12 is formed on a sleeve 11 on another arm 21 in position II, and a package 10 is unloaded from yet another arm 21 in position III.

The Applicant has realized that the mutual arrangement of the inner and outer tools 21, 25 during the top forming operation is crucial to the quality of the package 10. If the inner tool 21 is poorly aligned with the outer tool 25 during the top forming operation, the top 12 may be formed with an undesired appearance/thickness and/or with insufficient connection to the sleeve 11. FIG. 4A shows an example of such a misalignment and is a section view of an inner tool 21 and an outer tool 25 during the top forming operation. The inner tool 21, which carries a sleeve 11, has been arranged in position II and the outer tool 25 has been arranged in its operative position. Thereby, the end of the inner tool 21, and the sleeve end 11A, is received within a top forming cavity 25B of the outer tool 25. In the illustrated example, the inner tool 21 is slightly tilted in relation to the outer tool 25 in the rotation plane, as shown by an angle α between a symmetry axis 25A of the outer tool 25 and a longitudinal axis 21A of the inner tool 21. The Applicant has realized that if the misalignment can be detected and quantified, it is possible to compensate for the misalignment and thereby improve the performance of the station 2. In the example of FIG. 4A, the compensation may involve modifying the predefined angular position of the wheel 22 at position II to reduce the angle α. After significant experimentation, the Applicant has found that the lateral force acting on the inner tool 21 may be analyzed for detection of a misalignment. In the example of FIG. 4A, the tilting of the inner tool 21 in relation to the outer tool 25 increases the lateral force LF on the inner tool 21 as the inner tool 21 is pressed against the wall of the cavity 25B.

Based on these insights and significant experimentation, the Applicant has conceived a monitoring procedure for detecting and compensating for misalignments between the inner and outer tools 21, 25 in a top forming station 2. The monitoring procedure involves a step of determining, based on a measurement signal, at least one parameter value indicative of a lateral force on the inner tool 21, in position II, while the outer tool 25 is arranged to surround the end of the inner tool 25. The monitoring procedure further involves a step of selectively adjusting, based on the at least one parameter value, a relative position between the inner tool 21 and the outer tool 25. The monitoring procedure will be further exemplified and explained below with reference to FIGS 6-9.

The measurement signal may be provided in many different ways. As shown in FIG. 3, one or more sensors 26 may be arranged in the station 2 to generate a measurement signal S1 indicative of the lateral force LF. The respective sensor 26 may, for example, be a force sensor, a strain sensor, or a torque sensor. The respective sensor 26 may be associated with the drive unit 23 (as shown), the inner tool 21, the wheel 22, or the outer tool 25. In some embodiments, the measurement signal S1 is generated by the drive unit 23 and may be representative of the torque required to hold the wheel 22 at a fixed angular position, i.e. in position II. FIG. 4B shows a situation in which the drive unit 23 generates a torque T around a rotation axis of the wheel 22 to withstand a lateral force LF acting on the end of the inner tool 23. The torque T may be given by or derived from the momentary drive power or drive current of the drive unit 23, or from a dedicated torque sensor in the drive unit 23. There are commercially available electric motors that are configured to provide a measurement signal that represents the current torque. Examples of such motors include servo motors from Rockwell Automation, such as model MPL-B420P-M, and Wittenstein, such as model TPM050x-031P-6.

The at least one parameter value may be indicative of both magnitude and direction of the lateral force. For example, opposite directions may be assigned positive and negative signs. In the example of FIG. 4B, the sign of the torque T may indicate if the lateral force (LF) is directed in the clockwise or anticlockwise direction.

One example of the monitoring procedure 200 is shown in the flow chart of FIG. 6. The monitoring procedure 200 may be performed by the control device 230, based on the measurement signal S1 received via the signal interface 233 as well as any further input signals that may be required. In step 201, the control device 230 waits until the outer tool 25 is in its operative position in relation to an inner tool 21 before proceeding to step 202. For example, in step 201, the control device 23 may wait until an output signal (not shown) of the drive unit 23 confirms that an inner tool is in position II and an output signal (not shown) of the actuator 26 confirms that the outer tool 25 is in the operative position. Alternatively, the control device 230 may wait for a predefined time period in step 201. In step 202, the measurement signal S1 is processed to determine the at least one parameter value. In some embodiments, a plurality of parameter values indicative of lateral force are determined in step 202. In step 203, the at least one parameter value is evaluated in relation to an acceptance criterion (e.g. a threshold value as described below). The acceptance criterion is fulfilled when the at least one parameter value indicates a sufficiently small (or no) misalignment between the inner and outer tools 21, 25. If the acceptance condition is fulfilled, the procedure 200 returns to step 201. Otherwise, the control device 230 performs step 204, in which the relative position between the inner and outer tools 21, 25 is adjusted based on the at least one parameter value. Step 204 may involve an adjustment of the position of the inner tool 21, the outer tool 25, or both. Specifically, the adjustment is performed so as to reduce the misalignment, and thus reduce the lateral force acting on the inner tool 21. The adjustment may be given by a mathematical function that relates adjustment to parameter value, or a look-up table. The adjustment may account not only for the magnitude of the lateral force but also its direction.

In the example of FIGS 4A-4B, the at least one parameter value is indicative of the lateral force LF in the rotation plane of the arm 21. For such a parameter value, the relative position between inner and outer tools 21, 25 is adjusted in this rotation plane only. The inner tool 21 may be adjusted by changing the angle of rotation of the wheel 22 to reduce the angle α. The outer tool 25 may be adjusted by shifting its position sideways, i.e. in a direction transverse to the symmetry line 25A, and/or by tilting the outer tool 25. In some embodiments, the relative position between the inner and outer tools 21, 25 is adjusted by solely changing the angle of rotation of the wheel 22. Such an adjustment is simple to perform and obviates the complexity of moving the outer tool 25. In the example of FIGS 4A-4B, the wheel 22 may be turned counterclockwise to decrease the angle α.

If the lateral force is measured in a geometric plane other than the rotation plane, it is conceivable for the adjustment in step 204 to be made in this geometric plane provided that the station 2 comprises appropriate structures for such adjustment. However, it is presently believed that adjustment is most relevant in the rotation plane.

In some embodiments, the monitoring procedure 200 is performed concurrently with the production procedure 100, and specifically during the top forming operation (steps 104-105 in FIG. 3). The monitoring procedure 200 is thereby able to detect and compensate for alignment errors that occur during production. This minimizes the risk of producing large quantities of defect packages. In some embodiments, the monitoring procedure 200 is performed as a preparatory check before the production procedure 100 is started. The preparatory check aims at correcting any existing misalignment between the inner tools and the outer tool. During the preparatory check, the station 2 may be operated to produce a limited number of packages 10. Alternatively, the preparatory check may be performed with sleeves on the inner tools but without operating the outer tool to provide tops on the sleeves. In another alternative, the preparatory check may be performed without sleeves on the inner tools and, consequently, without operating the outer tool to provide tops.

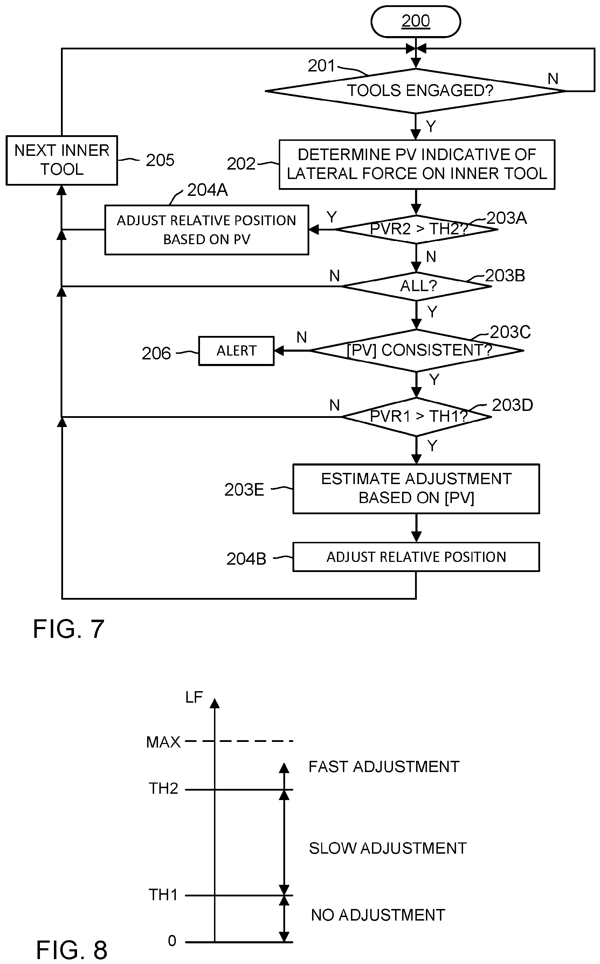

FIG. 7 is a flow chart of another example of the monitoring procedure 200. The example in FIG. 7 presumes that there is more than one inner tool 21 on the wheel 22, for example as shown in FIG. 3. The procedure 200 includes two evaluations of the need for compensation; a slow evaluation and a fast evaluation. The slow evaluation is performed after a full turn of the wheel 22 and is based on an ensemble of parameter values obtained for all inner tools 21 during the full turn. When the ensemble of parameter values indicates a certain misalignment between the inner and outer tools, the position of the wheel and/or the outer tool is adjusted to reduce the misalignment. The adjustment is made collectively for all inner tools, for example to reduce the average misalignment for all inner tools or to reduce the largest misalignment among the inner tools. The slow evaluation thereby serves to evaluate the processing device 210 as a whole and, if deemed necessary, find an adjustment that is acceptable for all inner tools. If the evaluation and adjustment instead are made for each inner tool separately, there is a risk of runaway compensation, i.e. that an adjustment of one inner tool causes a need for adjustment of the next inner tool, and so on, since all inner tools are fixedly arranged on a common wheel. Runaway compensation may be avoided by the slow evaluation.

The fast evaluation, on the other hand, is separately performed for each inner tool 21 but is tailored to detect larger misalignments than the slow evaluation to mitigate the risk of runaway compensation. When parameter value(s) indicate a misalignment of sufficient magnitude, an adjustment is made. The fast evaluation serves to detect misalignments that are likely to result in excessively poor performance or even mechanical damage to the inner tool or the other tool. The fast evaluation is based on the insight that if there is a large misalignment between one inner tool and the outer tool, this misalignment is likely to exist for all inner tools on the wheel 22.

The procedure in FIG. 7 comprises steps 201 and 202, which are identical to the corresponding steps in FIG. 6. Thus, the procedure 200 waits until an outer tool is arranged to surround the end of the inner tool (step 201), and determines at least one parameter value, PV (step 202). The procedure 200 then proceeds to perform a fast evaluation by step 203A, in which a representative magnitude value, PVR2, is determined for PV and compared to a threshold value, TH2. If PVR2 exceeds TH2, the procedure 200 proceeds to step 204A, in which an adjustment is made to counteract the misalignment represented by PV. If plural parameter values are determined in step 202, PVR2 may be given as a mean, a median, a modal value, a maximum value, a minimum value, etc., for the plural parameter values. If a single parameter value is determined in step 202, PRV2 may be set to the magnitude of this parameter value. In some embodiments, step 204A comprises calculating an adjustment value to be applied by the control device when aligning the next inner tool and the outer tool (cf. steps 103-104 in FIG. 3). For example, the adjustment value may change the predefined angular position of the wheel 22 to arrange the next inner tool in position II. After step 204A, the procedure 200 proceeds to monitor the next inner tool on the wheel (step 205). If PRV2 does not exceed TH2 in step 203A, the procedure proceeds to step 203B to check if parameter values have been determined for all inner tools, i.e. for a complete turn of the wheel. If not, the procedure 200 proceeds to monitor the next inner tool (step 205).

When all inner tools have been monitored, step 203B proceeds to step 203C for a consistency check of the ensemble of parameter values, designated [PV], that has been determined by step 202 for the inner tools during a complete turn of the wheel. The consistency check in step 203C looks for inconsistent directions within [PV]. As noted above, a parameter value may represent both magnitude and direction of the lateral force. For example, step 203C may identify an inconsistency if [PV] contains parameter values of different signs, which would imply that the corresponding lateral forces are in opposite directions. To identify an inconsistency, step 203C may also require the magnitude of the parameter values to exceed a threshold value, i.e. that the inconsistent lateral forces have a relevant magnitude. If step 230C identifies an inconsistency, the procedure 200 proceeds to step 206 which causes the control device to generate an alert, for example via a feedback device (cf. 234 in FIG. 3). Alternatively or additionally, step 206 may cause the control device to stop the operation of the top forming station. The motivation for the consistency check of step 203C is that the direction of the lateral force should be the same for all inner tools, since they are fixedly arranged on the wheel. If the directions differ, a mechanical error may have occurred, for example that one or more inner tools have been bent or otherwise deformed.

If no inconsistency is found in step 203C, the procedure proceeds to step 203D to perform a slow evaluation, in which a representative value, PVR1, is determined for [PV] and compared to a threshold value, TH1. PRV1 may be given as a mean, a median, a modal value, a maximum value, a minimum value, etc., of the parameter values in [PV]. The calculation of PRV1 is based on the magnitude of the parameter values, and optionally also their sign. As understood from the discussion above, TH1 is smaller than TH2. If PVR1 exceeds TH1, the procedure 200 proceeds to step 203E, in which a suitable adjustment is estimated based on [PV], and step 204B, in which the relative position is adjusted accordingly. For example, the suitable adjustment may be estimated based on PRV1 or another representative value of [PV], by use of a look-up table or a mathematical function. In some embodiments, step 203E results in an adjustment value, e.g. an angular change, which is applied by the control device when aligning the next inner tool and the outer tool (cf. steps 103-104 in FIG. 3). After step 204B, the procedure 200 proceeds to monitor the next inner tool on the wheel (step 205).

FIG. 8 shows TH1 and TH2 on a scale of lateral force, LF. The scale extends from zero (0) to a maximum value, MAX. As shown, TH1 and TH2 separates the scale into three force ranges. The range between TH1 and TH2 results in a slow adjustment in accordance with steps 203E and 204B. The range between TH2 and MAX results in a fast adjustment in accordance with step 204A. The range between 0 and TH1 results in no adjustment. It may be noted that FIG. 8 presumes that the lateral force is given by positive numbers, i.e. as magnitude values. It is currently believed that, at least for the Rockwell Automation and Wittenstein motors exemplified above, adequate performance is achieved by setting TH1 at 10%-40% of MAX and TH2 at 60%-90% of MAX. In some embodiments, TH1 is set at 20%-30% of MAX and TH2 is set at 70%-80% of MAX.

In the example of FIG. 7, the adjustment to be made is determined based on the lateral force acting on a current inner tool in engagement with the outer tool, and the adjustment is then applied for the next inner tool to be aligned with the outer tool. It is conceivable to apply the adjustment to the current inner tool to accomplish an immediate correction of the current inner tool. However, such immediate correction may not be possible if the end of the current inner tool is locked within the outer tool. Further, the immediate correction may cause instabilities in the position control of the inner and outer tools.

It may be noted that the monitoring procedure in FIG. 7 may be modified by omitting any of the consistency check, the fast evaluation and the slow evaluation, depending on the perceived risks for a specific top forming station and the required monitoring performance.

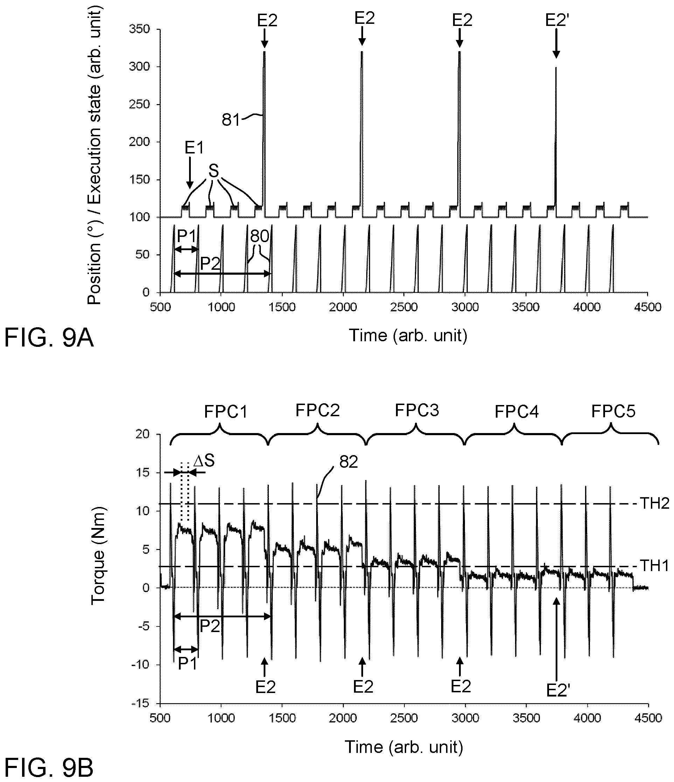

FIGS 9A-9B are included to illustrate the utility of the slow compensation for the processing device 201 in FIG. 3. In FIG. 9A, signal 80 designates the angular position of the wheel 22, given as indexed angular values between 0° and 90°. As the angular values increase from 0° to 90°, the wheel 22 is rotated a quarter of a full turn, whereupon the angular value is reset to 0°. The time period P1 designates the time while the wheel 22 is stationary, in this case approximately 1.6 seconds. During P1, the top formation operation takes place. The time period P2 designates the duration of a full turn of the wheel 22 and thus corresponds to four top forming operations, one for each inner tool 21 on the wheel 22. A full turn of the wheel 22 is also denoted "full production cycle", FPC. The signal 81 represents the execution state of software code that is executed on the control device 230 at each time step. The execution state corresponds to a subset of the software code. The numbering of the execution states is arbitrary and merely given to indicate when corresponding execution states occur over time. Reference sign S indicates data sampling, which corresponds to step 202 in FIGS 6-7 and thus results in parameter values. In the illustrated example, five parameter values are obtained for each time period P1. By sampling more than one parameter value for each time period P1, the impact of spurious data samples is reduced. Reference sign E1 designates an execution step corresponding to steps 203A and 203B in FIG. 7, and optionally step 204A if fast compensation is initiated. Although E1 is only indicated once in FIG. 9A, it is to be understood that each data sampling S is followed by E1. Reference sign E2 designates a set of execution states corresponding to steps 203D, 203E and 204B. Thus, E2 results in a slow compensation. Reference sign E2' designates a set of execution states corresponding to step 203D, i.e. without any slow compensation.

Turning to FIG. 9B, signal 82 represents the torque of the drive unit 23, here a servo motor, in coordination with the data in FIG. 9A. In this example, the lateral force is given by the torque. Thus, the parameter values are torque values. In FIG. 9B, the data sampling occurs within a time period ΔS during the respective top forming operation. During ΔS, the torque values are relatively stable since the wheel 22 is stationary. The spikes at the start and end of the time period P1 represent the torque of the drive unit 23 when the wheel 22 is accelerated and decelerated. For clarity, consecutive full production cycles are enumerated from FPC1 to FPC5 at the top of FIG. 9B. Dashed horizontal lines indicate the location of TH1 and TH2 on the torque scale. As seen in FIG. 9B, the torque values during the top formation operations are smaller than TH2, so no fast compensation is initiated. In FPC1, the torque values are larger than TH1, causing a slow compensation (E2) to be made for the upcoming FPC2. In FPC2, the torque values are reduced as a result of the slow compensation. However, the torque values are still larger than TH1, causing another slow compensation (E2) to be made for the upcoming FPC3. This is repeated also for the upcoming FPC4, which reduces the torque values below TH1 in FPC4 and causes the control device to refrain from making a slow compensation (E2') for the upcoming FPC5. In FPC5, the torque values are therefore approximately the same as in FPC4.

The drawings, and in particular FIG. 7, may be seen to exemplify some embodiments of a monitoring procedure in relation to a top forming machine or station that is operated in accordance with the production procedure 100 in FIG. 5. The top forming machine comprises a plurality of inner tools which are arranged to project radially from a rotatable member, and the production procedure is repeated for each inner tool among the plurality of inner tools. In one embodiment, the monitoring procedure comprises: determining (step 202) at least one parameter value for a respective inner tool among the plurality of tools while the outer tool is arranged to surround the end of the respective inner tool, performing an evaluation (steps 203C, 203D, 203E) of a resulting dataset, [PV], of parameter values estimated for the plurality of inner tools, and selectively changing (step 204B), based on the evaluation, the angle of rotation of the rotatable member. In one embodiment, the angle of rotation of the rotatable member is changed in respect of an upcoming repetition of the production procedure. In other words, the angle of rotation is changed when the next inner tool is to be aligned with the outer tool. In one embodiment, [PV] associates each of the parameter values with a direction of the lateral force in the plane of rotation, and the evaluation comprises: evaluating (step 203C) [PV] for detection of inconsistent directions, and generating (step 206) an alert signal upon the detection of inconsistent directions. In one embodiment, the evaluation comprises: evaluating (step 203D) [PV] in relation to a threshold, TH1, and, upon detection that a representative value, PVR1, of [PV] exceeds TH1, determining (step 203E) an angular adjustment value for the rotatable member based on [PV], the angle of rotation of the rotatable member being changed in accordance with the angular adjustment value. In one embodiment, the angular adjustment value is determined (step 203E) based on PVR1. In one embodiment, PVR1 is a mean, a median, a modal value, a maximum value, or a minimum value. In one embodiment, the monitoring procedure further comprises: evaluating (step 203A), during each production procedure, the at least one parameter value for the respective inner tool in relation to a further threshold, TH2, which exceeds TH1, and changing (step 204A), upon detection that a representative value, PVR2, of the at least one parameter value exceeds TH2, the angle of rotation of the rotatable member. In one embodiment, the angle of rotation is changed based on the PVR2 that exceeds TH2.

The disclosure is not limited to the use of injection molding for providing the top on the sleeve. For example, the outer tool may be configured to perform other types of molding, such as blow molding, compression molding, or thermoforming. In a variant, the outer tool is configured to attach a ready-made top, or part thereof, onto the sleeve, for example by gluing, melting, mechanical attachment, etc. In a further variant, the outer tool is configured to shape portions of the sleeve into the top, or part thereof. Examples of such shaping are found in WO2010/085182 and DE102005048821.

Further, the sleeve may be made of or include other materials than paper-based laminate, such as cardboard or plastic material. The top may be made of any suitable material or combination of materials. Further, the technique disclosed herein may be applicable to the production of packages that are not bottle shaped. The monitoring technique described herein is equally applicable to a machine configured to produce a package for holding liquid food by providing a bottom portion onto the end of a sleeve. Thus, any reference to "top portion" herein may be replaced by "bottom portion", or the more general term "end portion".

## Claims

1. A computer-implemented method of operating a machine (2) to produce a package (10) for holding liquid food, wherein the machine (2) comprises an inner tool (21) and an outer tool (25), wherein the inner tool (21) projects radially from a rotatable member (22), which is operable to move the inner tool (21) from a loading position (I) into a processing position (II), in which the outer tool (25) is operable to be arranged to surround an end of the inner tool (21), said method comprising a production procedure (100) comprising:
operating (101) the rotatable member (22) to arrange the inner tool (21) in the loading position;
arranging (102) a package body (11) on the inner tool (21) in the loading position (I);
operating (103) the rotatable member (22) to move the inner tool (21) with the package body (11) from the loading position (I) to the processing position (II);
arranging (104) the outer tool (25) to surround the end of the inner tool (21) to thereby surround an end of the package body (11); and
operating (105) the outer tool (25) to provide a top portion (12) on the end of the package body (11), thereby producing said package (10),
said method further comprising a monitoring procedure (200) comprising:
determining (202), based on a measurement signal (S1), at least one parameter value (PV) indicative of a lateral force (LF) on the inner tool (21) in the processing position (II) while the outer tool (25) is arranged to surround the end of the inner tool (21); and
selectively adjusting (204), based on the at least one parameter value (PV), a relative position between the inner tool (21) and the outer tool (25).

2. The method of claim 1, wherein the measurement signal (S1) is generated while the package body (11) is located on the inner tool (21) in the processing position (II) and the outer tool (25) is operated to provide the top portion (12) on the end of the package body (11).

3. The method of claim 1 or 2, wherein the measurement signal (S1) is indicative of the lateral force (LF) and is obtained from an electrical motor (23) which is connected and operable to rotate the rotatable member (22), or from a sensor (S1) associated with the machine (2).

4. The method of any preceding claim, wherein the at least one parameter value (PV) is indicative of the lateral force (LF) in a plane of rotation of the inner tool (21), and wherein an angle of rotation of the rotatable member (22) is changed to adjust the relative position between the inner tool (21) and the outer tool (22).

5. The method of claim 4, wherein the machine (2) comprises a plurality of inner tools (21) which are arranged to project radially from the rotatable member (22), wherein the production procedure (100) is repeated for each inner tool (21) among the plurality of inner tools, and wherein the monitoring procedure (200) comprises:
determining (202) the at least one parameter value (PV) for a respective inner tool (21) among the plurality of tools while the outer tool (25) is arranged to surround the end of the respective inner tool (21); evaluating (203C, 203D, 203E) a resulting dataset ([PV]) of parameter values estimated for the plurality of inner tools; and selectively changing (204B), based on said evaluating (203C, 203D, 203E), the angle of rotation of the rotatable member (22).

6. The method of claim 5, wherein the angle of rotation of the rotatable member (22) is changed in respect of a subsequent repetition of the production procedure (100).

7. The method of claim 5 or 6, wherein the resulting dataset ([PV]) associates each of the parameter values with a direction of the lateral force (LF) in the plane of rotation, and wherein said evaluating (203C, 203D, 203E) comprises evaluating (203C) the resulting dataset ([PV]) for detection of inconsistent directions, and generating (206) an alert signal upon said detection of inconsistent directions.

8. The method of any one of claims 5-7, wherein said evaluating (203C, 203D, 203E) comprises: evaluating (203D) the resulting dataset ([PV]) in relation to a threshold (TH1), and, upon detection that a representative value (PVR1) of the resulting dataset ([PV]) exceeds the threshold (TH1), determining (203E) an angular adjustment value for the rotatable member (22) based on the resulting dataset ([PV]), wherein the angle of rotation of the rotatable member (22) is changed in accordance with the angular adjustment value.

9. The method of claim 8, wherein the angular adjustment value is determined (203E) based on the representative value (PVR1).

10. The method of claim 8 or 9, wherein the representative value (PVR1) is a mean, a median, a modal value, a maximum value, or a minimum value.

11. The method of any one of claims 8-10, wherein the monitoring procedure (200) further comprises: evaluating (203A), during each production procedure (100), the at least one parameter value (PV) for the respective inner tool (21) in relation to a further threshold (TH2), which exceeds the threshold (TH1) and changing (204A), upon detection that a representative value (PVR2) of the at least one parameter value (PV) exceeds the further threshold (TH2), the angle of rotation of the rotatable member (22).

12. The method of claim 11, wherein the angle of rotation of the rotatable member (22) is changed based on the representative value (PVR2) that exceeds the further threshold (TH2).

13. The method of any preceding claim, wherein the package (10) is shaped as a bottle.

14. A computer-readable medium comprising program instructions, which when executed by processor circuitry (231), is configured to cause the processor circuitry (231) to perform the method of any one of claims 1-13.

15. A control device which is configured to perform the method of any one of claims 1-13, said control device comprising a signal interface (233) configured to receive the measurement signal (S1) and provide control signals (C1-C4) for operating the machine (2).
